# EUROPEAN PATENT SPECIFICATION

(11) **EP 3 222 014 B1**
(45) Date of publication and mention of the grant of the patent: **24.07.2019**
(21) Application number: 14812664.2
(22) Date of filing: 17.11.2014
(51) Int. Cl.: H04L 12/825, H04L 12/823, H04W 28/02, H04L 12/801

(54) **ACTIVE QUEUE MANAGEMENT FOR A WIRELESS COMMUNICATION NETWORK**
AKTIVE WARTESCHLANGENVERWALTUNG FÜR EIN DRAHTLOSKOMMUNIKATIONSNETZWERK
GESTION ACTIVE DE FILES D'ATTENTE POUR UN RÉSEAU DE COMMUNICATION SANS FIL

(43) Date of publication of application: 27.09.2017
(73) Proprietor: Telefonaktiebolaget LM Ericsson (publ), 164 83 Stockholm (SE)
(72) Inventor: BERGQUIST, Gunnar, S-164 45 Kista (SE); JONSSON, Anders, S-187 35 Täby (SE)
(74) Representative: Zacco Sweden AB
(86) International application number: PCT/SE2014/051364
(87) International publication number: WO 2016/080871

(56) References cited:
- WO-A1-2009/008817
- WO-A1-2010/056158
- WO-A1-2012/115545
- WO-A1-2013/081511
- JP-A- 2003 244 223
- TELEFON AB LM ERICSSON ET AL: "ECN in MTSI", 3GPP DRAFT; S4-090612 - ECN IN MTSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Kista; 20090812, 12 August 2009 (2009-08-12), XP050356897, [retrieved on 2009-08-12]

## Description

### TECHNICAL FIELD

This disclosure generally relates to Active Queue Management (AQM) in wireless communication networks. More particularly, the disclosure presents a method of congestion control performed by a first network node of a wireless communication network utilizing a distributed queue system for in-sequence delivery of data packets between the first network node and a second network node, such as an Evolved Packet System (EPS). The disclosure further presents a first network node for congestion control.

### BACKGROUND

Long Term Evolution (LTE) is a radio access network technology evolved from Wideband Code Division Multiple Access (WCDMA) providing high peak bit rates and good end-to-end Quality of Service (QoS). Nevertheless, the wireless link is still likely to be a bottleneck of an end-to-end connection in many cases. The wireless link may also be a bottleneck because modern wireless communication networks are used by a multitude of users. In an overload situation, e.g. in a situation where the incoming data rate to the wireless link is larger than the outgoing rate, the excessive data is typically temporarily stored in memory. This memory is often referred to as a transmit buffer or queue. If the overload continues, the data queue may accumulate and become large. This may cause a number of challenges e.g., large end-to-end delays, unfair sharing between different flows, etcetera.

Also, because a buffer is finite, the queue might finally exceed the physical limitation, and some data may have to be discarded. A relatively straightforward way to handle this challenge is to discard newly incoming data when the buffer becomes full. This approach is intuitive and relatively easy to implement. However, the performance is far from optimal in terms of end user delay. Furthermore, the performance is generally not optimal in terms of interaction with the Transmit Control Protocol/Internet Protocol (TCP/IP), since the TCP/IP reacts negatively to large losses of consecutive data. A more sophisticated approach to manage buffer queues is referred to as Active Queue Management (AQM). AQM allows for dropping packets before the buffer is full. As a result, assuming IP packets are being sent over a TCP/IP link, a TCP sender may sense the segment loss and, as a consequence, reduce its sending rate. In this way, the queue size and queuing time may be maintained at levels that are appropriate to the link rate. In general, the throughput of the end-to-end link will nevertheless not be reduced significantly. Considerable work has therefore been done for AQM.

For example, the international patent application WO2012/057667A1 assigned to Telefonaktiebolaget L M Ericsson (Publ.) discloses a congestion control in a communication network, such as WCDMA. This document describes an AQM-based method where a network node detects a condition indicative of a congestion and, in response thereto, manipulates the content of a Protocol Data Unit (PDU). While the technology described in WO2012/057667A1 provides many advantages, this technology may be inadequate for LTE given the differences in network architecture. As a mere example, the Radio Link Control (RLC) protocol is generally terminated in the evolved NodeB (eNB) in LTE. However, the RLC protocol is generally terminated in the Radio Network Controller (RNC) in WCDMA.

Document WO2012/115545 A1 discloses a Radio Network Controller (RNC) for an HSPA enabled cellular access system. The RNC is arranged to be connected to a radio base station by a transport network through which the RNC sends and receives traffic to and from UEs.

Document WO2010/056158 A1 discloses a first communication device arranged to notify congestion indications to a second communication device.

Document JP 2003 244223 A discloses a congestion controlling method in a packet transmission network which comprises performing transmitting control with respect to packet transmission based on specified sending station and destination address while setting the priority of congestion notifications to high.

### SUMMARY

The present invention is defined in the appended independent claims to which reference should be made. Advantageous features are set out in the appended dependent claims.

As will be further elucidated from the following detailed description, the various embodiments proposed herein allow for a relatively quick congestion indication to the second network node. In the earlier-mentioned WO2012/057667A1, the manipulation of the content of the PDU is made in the network node (e.g. a Radio Base Station (RBS)) prior to transmission to the UE. While this has many advantages, this may in fact also result in a potential delay before the receiving entity is made aware of the congestion. In contrast, the various embodiments described herein may allow for a comparatively quicker indication to the receiving entity (i.e. the second network node) that there exists congestion. In turn, the quicker indication that a congestion exists allows for the second network node to take appropriate measures quicker, e.g. by discarding or distorting a subsequent data packet upon receiving the subsequent data packet.

### BRIEF DESCRIPTION OF THE DRAWINGS

These and other aspects, features and advantages will be apparent and elucidated from the following description of various embodiments, reference being made to the accompanying drawings, in which:
Fig. 1 schematically illustrates an example wireless communication network;
Fig. 2 schematically illustrates parts of a first network node shown in Fig. 1, the first network node being exemplified as a eNB;
Fig. 3 is a flowchart of a method in a first network node, in accordance with an embodiment;
Fig. 4 is a flowchart of a method in a second network node, in accordance with an embodiment;
Fig. 5A schematically illustrates the delivery of a L2 control message between the first network node and the second network node, in accordance with an embodiment;
Fig. 5B schematically illustrates a disposition, or format, of the L2 control message of Fig. 5A;
Fig. 6A schematically illustrates the delivery of a L2 control message between the first network node and the second network node, in accordance with another embodiment;
Fig. 6B schematically illustrates a disposition, or format, of the L2 control message of Fig. 6A;
Fig. 7 schematically illustrates an example implementation of the first network node;
Fig. 8 schematically illustrates another example implementation of the first network node;
Fig. 9 schematically illustrates still another example implementation of the first network node;
Fig. 10 schematically illustrates an example implementation of the second network node;
Fig. 11 schematically illustrates another example implementation of the second network node;
Fig. 12 schematically illustrates still another example implementation of the second network node; and
Fig. 13 illustrates an example carrier in the form of a computer-readable medium, wherein the computer-readable medium comprises computer program.

### DETAILED DESCRIPTION

The invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements or method steps (or actions) throughout the description.

As mentioned earlier, while the approach described in WO2012/057667A1 provides many advantages, this approach may also result in a potential delay before a receiving entity (i.e., the UE in the context of WO2012/057667A1) is made aware of a congestion situation.

Accordingly, it is a general object to provide improved methods and apparatuses (e.g., network nodes) for congestion control in wireless communication networks. More particularly, it would be advantageous to provide methods and network nodes that minimize, or reduce, the potential delay before the receiving entity (i.e. the second network node) is made aware of the congestion. Furthermore, it would be advantageous to provide methods and network nodes that fit the architecture of EPS.

To address the above-mentioned general object, and in accordance with an embodiment described herein, first and second network nodes and corresponding methods are disclosed. The first network node and the second network node are both operable in a wireless communication network utilizing a distributed queue system for in-sequence delivery of data packets between the first network node and a second network node. The first network node detects a condition indicative of a congestion. In response thereto, the first network node transmits a control message to the second network node. The control message comprises an instruction to the second network node to discard, or distort, a subsequent data packet. The second network node receives said control message from the first network node and, in response thereto, the second network node discards, or distorts, a subsequent data packet upon receipt of the subsequent data packet.

This may allow for minimizing, or at least reducing, the time it takes for the second network node to receive a congestion indication and thus be informed about a congestion situation. In turn, this may result in an improved congestion control in wireless communication networks. The described approach further recognizes the differences in architecture between WCDMA (which is the focus of WO2012/057667A1) and EPS, and accordingly, the approach described herein may be particularly useful in EPS and in wireless communication networks beyond EPS.

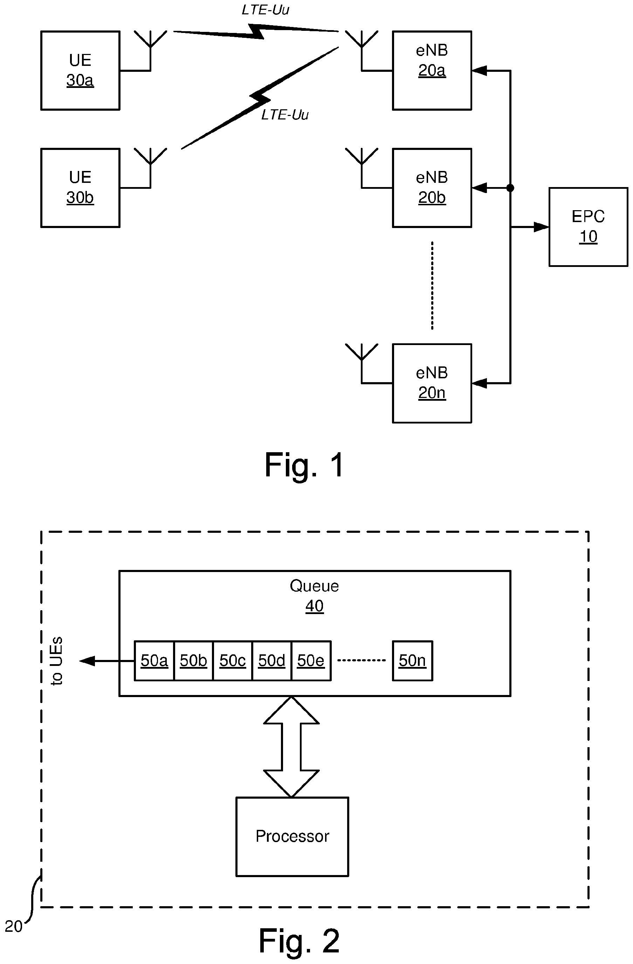

Reference is now made to Fig. 1, which schematically illustrates a wireless communication network where embodiments of the present invention may be employed. In this example, the wireless communication network is an Evolved Packet System (EPS). The EPS may comprise a core network 10 (i.e., the Evolved Packet Core (EPC)) and a radio access network (i.e., Evolved Universal Terrestrial Radio Access Network (E-UTRAN)). The EPC 10 may comprise various core network nodes such as a Serving Gateway (SGW), a PDN Gateway (PGW), a Mobility Management Entity (MME), and a Home Subscriber Server (HSS). The EPC 10 may further be operatively connected to external networks, such as an IP Multimedia Core Network System (IMS). The radio access network, here exemplified by an E-UTRAN, may comprise a number of first network nodes, here exemplified as eNBs 20a-n. Each of the eNB's 20a-n is operatively connectable to the EPC 10. Furthermore, a first UE 30a and a second UE 30b may be operatively connected to an eNB (e.g., eNB 20a) over wireless connections for communication of data packets. For simplicity, only two UEs 30a, 30b are shown in Fig. 1. However, in practice, any viable number of UEs may be operatively connected at any time to any one of the eNBs 20a,.., 20n over such wireless connections.

In the following, reference will be made to a first network node exemplified as an eNB 20 and to a second network node exemplified as a UE 30. However, this is not intended as limiting. In alternative embodiments the first network node could be a UE and the second network node could be a eNB. Accordingly, the herein described approach allows for bi-directionality.

According to embodiments of the present invention, a so called distributed queue system is employed. In such a distributed queue system, the queue of data packets to be delivered (i.e., transmitted) to the second network node (e.g. UEs 30a, 30b) are distributed between the first network node (e.g. eNB 20) and the second network node (e.g. UE 30), such that part of the queue resides in the first network node and part of the queue resides in the second network node. As will be appreciated, in some embodiments the distributed queue system may be employed in the downlink (DL), i.e. in the direction from the network side towards the UEs 30a-b.

Furthermore, according to embodiments of the present invention, a so called persistent retransmission protocol may be employed, such as the radio link control (RLC) protocol. A persistent retransmission protocol is a protocol that transmits data packets, monitors response from the receiving entity and in case of a missing response or indication of missing or erroneously decoded data packets, requests retransmission and keeps on doing this e.g. for a predefined time or number of attempts.

Embodiments of the present invention are described below in the context of EPS. However, this is not intended as limiting. The embodiments of the present invention are equally well applicable to other types of radio (or, other) communication networks utilizing a distributed queue system for in-sequence delivery of data packets, where the queue is distributed between a first network node (e.g. eNB 20) and a second network node (e.g. UE 30).

Fig. 2 schematically illustrates part of the eNB 20 in accordance with an embodiment of the present invention. As shown in Fig. 2, a queue 40 for temporary storage of data packets 50a-n waiting for delivery (i.e., transmission) to UEs 30a-b resides in the eNB 20. As will be appreciated, the number of data packets 50a-n may vary in time depending on data traffic etc. Furthermore, the eNB 20 may comprise a processor, or control unit, for controlling the queue 40. Of course, the eNB 20 may comprise numerous other units as well, such as radio circuitry and digital baseband circuitry, required for its functioning. Various implementation examples of the eNB 20 will be described later.

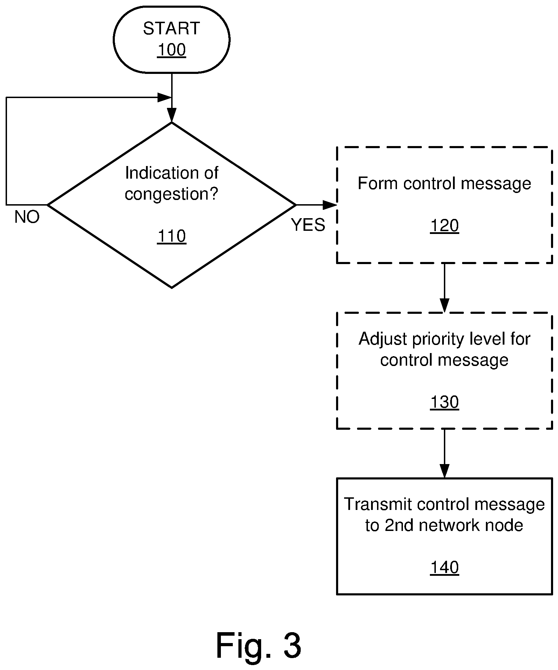

Fig. 3 illustrates a flowchart of a method 100 in accordance with an embodiment of the present invention. The method 100 of congestion control is performed by, or otherwise executed in, a first network node, hereinafter exemplified by an eNB 20. The eNB 20 is operable in a wireless communication network (e.g., EPS) utilizing a distributed queue system for in-sequence delivery of data packets between the first network node and a second network node, such as an UE.

### Action 110

It is checked whether a condition indicative of a congestion has occurred. If not, the method (or, procedure) may continue checking whether a condition indicative of a congestion has occurred. This may e.g. be done periodically at pre-defined intervals. Alternatively, this may be done continuously. Action 110 may thus be seen as an operation of "waiting for a condition indicative of congestion to occur". If it is detected, or otherwise determined, that a condition indicative of congestion has indeed occurred, the method may proceed to optional action 120. In alternative embodiments, the method may proceed directly to action 140.

It should be appreciated there may exist various different ways to detect a condition indicative of congestion. For example, a buffer level (e.g., a L2 buffer level) may be monitored in order to detect congestion. Monitoring the buffer level may e.g. include monitoring one or more of the following: the number of bytes, the number of SDUs, segments of SDU's, PDUs or portions of the PDUs in the RLC buffer. Additionally, or alternatively, monitoring the buffer level may include monitoring the queuing delay of the buffer, i.e. the time elapsed since a head of a SDU was inserted into the buffer. Additionally, or alternatively, monitoring the buffer level may include monitoring how quickly any one or several of the aforementioned factors increase.

### Action 120

In response to a detection 110, or determination, that a condition indicative of a congestion has occurred, a control message may be formed, or created. The control message is formed to include an instruction to the second network node (here exemplified by UE 30) to discard, or distort, a subsequent data packet.

### Action 130

A priority level of the control message that was formed in action 120 may be adjusted in order to give the control message an elevated priority level.

### Action 140

In response to a detection 110, or determination, that a condition indicative of a congestion has occurred, a control message is transmitted to the second network node (i.e., the UE 30 in this example. The control message includes an instruction to the UE 30 to discard, or distort, a subsequent data packet. In some embodiments, the control message is a pre-defined message, which may be stored locally in eNB 20 for transmission to the UE 30 upon detection of a condition indicative of a congestion. In other words, immediately upon detection 110 that the condition indicative of the congestion has occurred, the control message can be transmitted to the second network node. Thus, in some embodiments the actions 120 and 130 are not necessary.

The control message is preferably, though not necessarily, a L2 control message. In one embodiment, the L2 control message is a RLC PDU. In another embodiment, the L2 control message is a PDCP PDU. In still another embodiment, the L2 control message is a MAC CE. Furthermore, the aforementioned subsequent data packet may be an IP packet. For example, in some embodiments the subsequent data packet is the next IP packet that is converged (or, delivered) in-sequence from a L2 protocol stack.

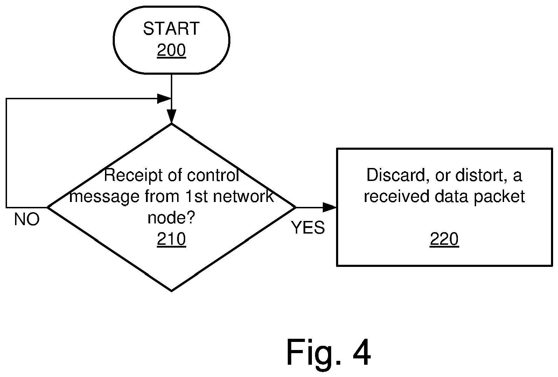

Fig. 4 illustrates a flowchart of a corresponding method 200 of an embodiment of the present invention. The method 200 of congestion control is performed by, or otherwise executed in, the second network node, i.e. the UE 30 in this example. The UE 30 is operable in a wireless communication network (e.g., EPS) utilizing a distributed queue system for in-sequence delivery of data packets between the first network node (i.e., eNB 20 in this example) and the UE 30.

### Action 210

It is checked whether a control message has been received from the eNB 20, wherein said control message includes an instruction to the UE 30 to discard, or distort, a subsequent data packet. If the control message has not been received, the method (or, procedure) may continue checking whether a control message has been received. This may e.g. be done periodically at pre-defined intervals. Alternatively, this may be done continuously. Action 210 may thus be seen as an operation of "waiting for a receipt of a control message indicating that a congestion situation has occurred". If, or when, a control message is received 210, the method may proceed to action 220.

### Action 220

In response to receiving 210 the control message from the eNB 20, a subsequent data packet is discarded 220, or distorted 220, upon receipt of said subsequent data packet.

As described earlier, the control message may be a L2 control message. In one embodiment, the L2 control message is a RLC PDU. In another embodiment, the L2 control message is a PDCP PDU. In still another embodiment, the L2 control message is a MAC CE. Furthermore, the aforementioned subsequent data packet may be an IP packet. For example, in some embodiments the subsequent data packet is the next IP packet that is converged (or, delivered) in-sequence from a L2 protocol stack.

In the following, various detailed embodiments of the present invention will be described in further detail.

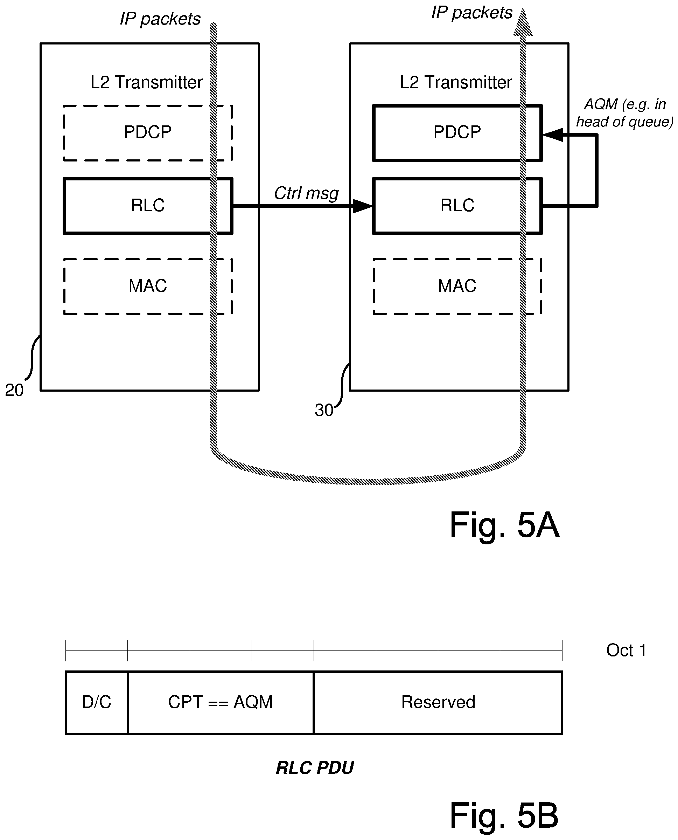

Figs. 5A and 5B illustrate an embodiment where a first network node (i.e., eNB 20) and a second network node (i.e. UE 30) communicates with each other via a L2 transmitter and L2 receiver, respectively. In this embodiment, the L2 transmitter and receiver communicates with a control message in the form of a RLC PDU. Fig. 5B schematically illustrates a possible disposition, or format, of the RLC PDU. The size may e.g. be one (1) byte. As can be seen in Fig. 5B, a CPT field of the RLC PDU may comprise an AQM instruction. According to this embodiment, the AQM instruction is an instruction to the UE 30 (see Fig. 5A) to discard, or distort, a subsequent data packet. For example, the AQM instruction shown in Fig. 5B may instruct a L2 receiver at the UE 30 to discard, or alternatively, distort a next Service Data Unit (SDU) converging as an IP packet from the L2 stack. In other words, the L2 control message (in this example the RLC PDU) may comprise an instruction to a L2 receiver of the receiving entity (i.e., the second network node 30) to discard, or distort, a data packet that would otherwise converge to the IP layer.

As can also be seen in Fig. 5B, this embodiment allows for four (4) reserved bits, which may e.g. be used to indicate the available bandwidth or the L2 buffer level, quantized to 16 levels. The term L2 buffer level is generic and may for example depict the number of bytes, or SDUs, segments of SDUs, PDUs or portions of PDUs in a RLC buffer. It could additionally, or alternatively, depict the queuing delay of the buffer i.e. the time elapsed since a head of a SDU was inserted into the transmission or retransmission buffer, or the rate at which any one of the abovementioned numbers increase.

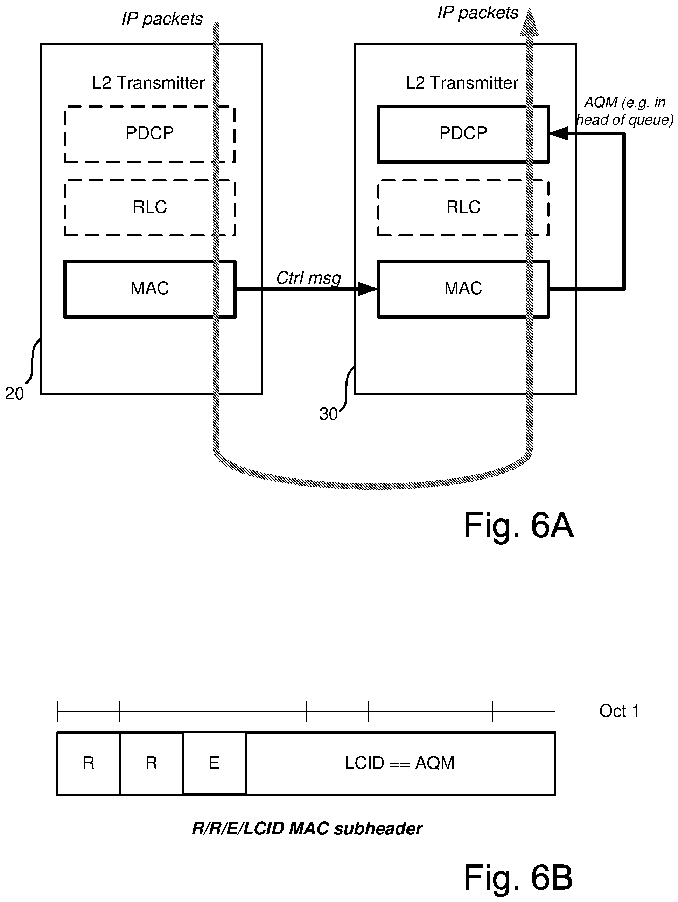

Figs. 6A and 6B illustrate another embodiment where a first network node (i.e., eNB 20) and a second network node (i.e. UE 30) communicates with each other via a L2 transmitter and L2 receiver, respectively. In this embodiment, the L2 protocol may use a MAC CE. The MAC CE may comprise essentially the same elements of information as the RLC PDU described hereinabove with respect to Fig. 5B. Also, the processing may be the same or similar as the processing described with respect to Fig. 5A similar to above. A novel Logical Channel Identifier (LCID) field may be utilized for the AQM, which may be transmitted over the DL Shared Channel (DL-SCH) and the UL Shared Channel (UL-SCH), respectively.

The MAC CE itself may take many different dispositions, or formats. For example, a MAC CE sub header may have a disposition with 4 fields such as the R/R/E/LCID disposition shown in Fig. 6B. The LCID portion of the MAC CE sub header may comprise the AQM instruction. According to this embodiment, the AQM instruction is an instruction to the UE 30 (see Fig. 6A) to discard, or distort, a subsequent data packet. For example, the AQM instruction shown in Fig. 6B may instruct a L2 receiver at the UE 30 to distort, or discard, the next SDU converging as an IP packet from the L2 stack. In other words, the L2 control message (in this example the MAC CE) may comprise an instruction to a L2 receiver of the receiving entity (i.e., the second network node 30) to discard, or distort, a data packet that would otherwise converge to the IP layer. As can be further seen in Fig. 6B, the disposition of the MAC CE sub header shown in Fig. 6B allows for two (2) reserved bits (denoted "R"), which may for instance be used to indicate an available bandwidth or the L2 buffer level, e.g. quantized to four levels.

In some embodiments, the control message (e.g., the RLC PDU in Fig. 5B or the MAC CE sub header of Fig. 6B) may be formed, or created, by the eNB 20 in response to a detection by the eNB 20 of a condition indicative of a congestion (see Fig. 3). Furthermore, the eNB 20 (e.g., a scheduler or scheduler function thereof) may adjust a priority level of the control message to give the control message an elevated priority level (see Fig. 3). This way, the eNB 20 (or a scheduler or scheduler function thereof) may output the control message with a higher priority than would otherwise be the case if the priority level wasn't adjusted. The priority level could e.g. be dynamically adjusted in accordance with factors such as e.g. radio conditions, cell load, etc.

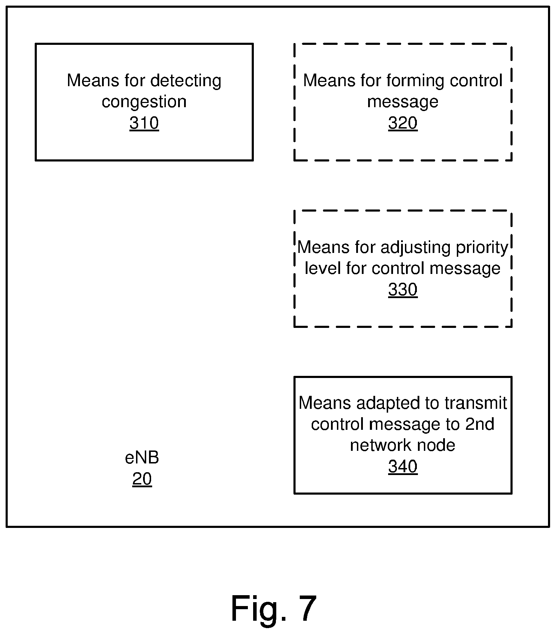

Turning now to Figs. 7-9, various example implementation of a first network node 20 will be described. With reference to Figs. 7-9, the first network node is exemplified by a eNB 20. The first network node 20 is configured to execute, or otherwise perform, the methods described throughout this disclosure.

In the example implementation illustrated in Fig. 7, the first network node 20 comprises means 310 adapted to detect a condition indicative of congestion, and means 340 adapted to transmit a control message to a second network node (e.g. a UE 30) in response a detection of a condition indicative of a congestion. The control message comprises an instruction to the second network node to discard, or distort, a subsequent data packet. Optionally, the first network node 20 may additionally comprise means 320 adapted to form the control message. Optionally, the first network node 20 may also comprise means 330 adapted to adjust a priority level of the control message to give the control message an elevated priority level. For example, the means 330 may be adapted to adjust the priority level of the control message in response the means 320 adapted to form the control message has formed the control message. As described earlier, the control message may be a L2 control message. In one embodiment, the L2 control message is a RLC PDU. In another embodiment, the L2 control message is a PDCP PDU. In still another embodiment, the L2 control message is a MAC CE. Furthermore, the aforementioned data packet may be an IP packet.

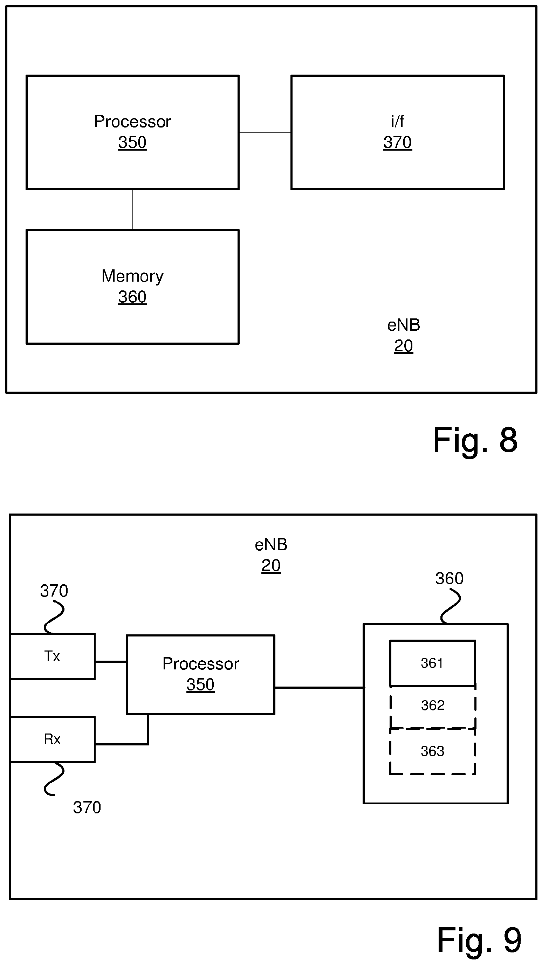

Fig. 8 illustrates another example implementation of the first network node. In the embodiment illustrated in Fig. 8, the first network node 20 comprises a processor 350, a memory 360 and a communications interface 370. The communications interface 370 may comprise a transmitter (Tx) and/or a receiver (Rx). Alternatively, the communications interface 370 may comprise a transceiver (Tx/Rx) having both transmission and reception capabilities. Further, the communications interface 370 may include a radio frequency (RF) interface allowing the first network node 20 to communicate with other devices and/or network nodes (e.g. UE 30) through a radio frequency band through the use of different radio frequency technologies such as LTE (Long Term Evolution), WCDMA (Wideband Code Division Multiple Access), any other cellular network standardized by the 3rd Generation Partnership Project (3GPP), etcetera. The memory 360 stores computer program code, which, when run in the processor 350 causes the first network node 20 to: detect a condition indicative of a congestion; and transmit, by means of the transmitter (Tx), a control message to the second network node in response a detection of a condition indicative of a congestion, wherein the control message comprises an instruction to the second network node to discard, or distort, a subsequent data packet. Optionally, the memory may also store computer program code, which, when run in the processor 350 causes the first network node 20 to form the control message. Optionally, the memory may also store computer program code, which, when run in the processor 350 causes the first network node 20 to adjust a priority level of the control message to give the control message an elevated priority level. As described earlier, the control message may be a L2 control message. In one embodiment, the L2 control message is a RLC PDU. In another embodiment, the L2 control message is a PDCP PDU. In still another embodiment, the L2 control message is a MAC CE. Furthermore, the aforementioned data packet may be an IP packet.

Fig. 9 illustrates yet another example implementation of the first network node 20. In the embodiment illustrated in Fig. 9, the first network node 20 comprises a processor 350, a memory 360 comprising various modules as well as a communications interface 370 including a transmitter (Tx) and a receiver (Rx). For example, a congestion detection module 361 is provided for detecting a condition indicative of a congestion. Furthermore, the transmitter 370 is adapted to transmit a control message to the second network node in response a detection (by means of the congestion detection module 361) of a condition indicative of a congestion. Again, the control message comprises an instruction to the second network node to discard, or distort, a subsequent data packet. Optionally, the memory 360 may also comprise a message forming module 362 for forming or otherwise creating the control message. Optionally, the memory 360 may also comprise priority adjustment module 363 for adjusting a priority level of the control message to give the control message an elevated priority level. As described earlier, the control message may be a L2 control message. In one embodiment, the L2 control message is a RLC PDU. In another embodiment, the L2 control message is a PDCP PDU. In still another embodiment, the L2 control message is a MAC CE. Furthermore, the aforementioned data packet may be an IP packet.

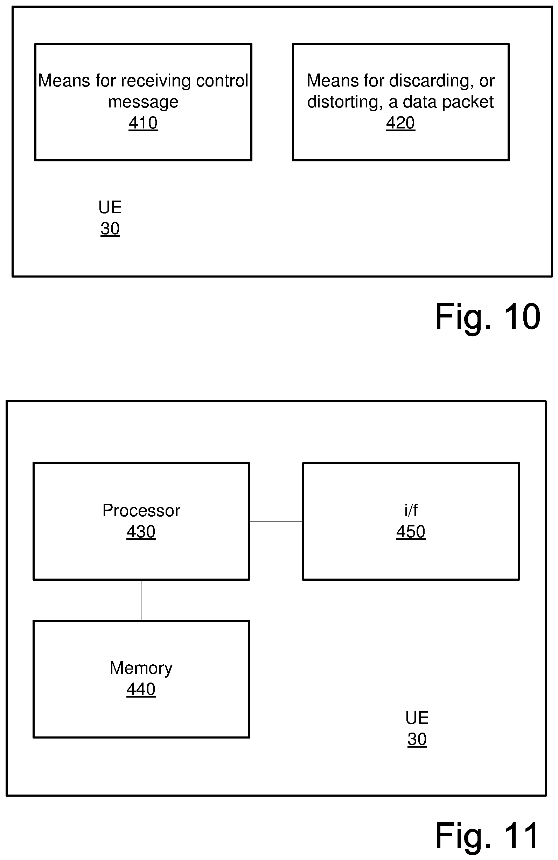

Turning now to Figs. 10-12, various example implementation of a second network node 20 will be described. With reference to Figs. 10-12, the second network node is exemplified by a UE 30. The second network node 20 is configured to execute, or otherwise perform, the methods described throughout this disclosure.

In the example implementation illustrated in Fig. 10, the second network node 20 comprises means 410 adapted to receive a control message from the first network node. The control message comprises an instruction to the second network node to discard, or distort, a subsequent data packet. Also, the second network node 20 comprises means 420 adapted to discard, or distort, a subsequent data packet upon receipt of said subsequent data packet.

Fig. 11 illustrates another example implementation of the second network node 30. In the embodiment illustrated in Fig. 11, the second network node 30 comprises a processor 430, a memory 440 and a communications interface 450. The communications interface 450 may comprise a transmitter (Tx) and/or a receiver (Rx). Alternatively, the communications interface 450 may comprise a transceiver (Tx/Rx) having both transmission and reception capabilities. Further, the communications interface 450 may include a radio frequency (RF) interface allowing the second network node 30 to communicate with other devices and/or network nodes (e.g. eNB 20) through a radio frequency band through the use of different radio frequency technologies such as LTE (Long Term Evolution), WCDMA (Wideband Code Division Multiple Access), any other cellular network standardized by the 3rd Generation Partnership Project (3GPP), etcetera. The memory 440 stores computer program code, which, when run in the processor 430 causes the second network node 30 to: receive, by means of the receiver 450, a control message from the first network node, wherein the control message comprises an instruction to the second network node to discard, or distort, a subsequent data packet; and discard, or distort, a subsequent data packet upon receipt of said subsequent data packet.

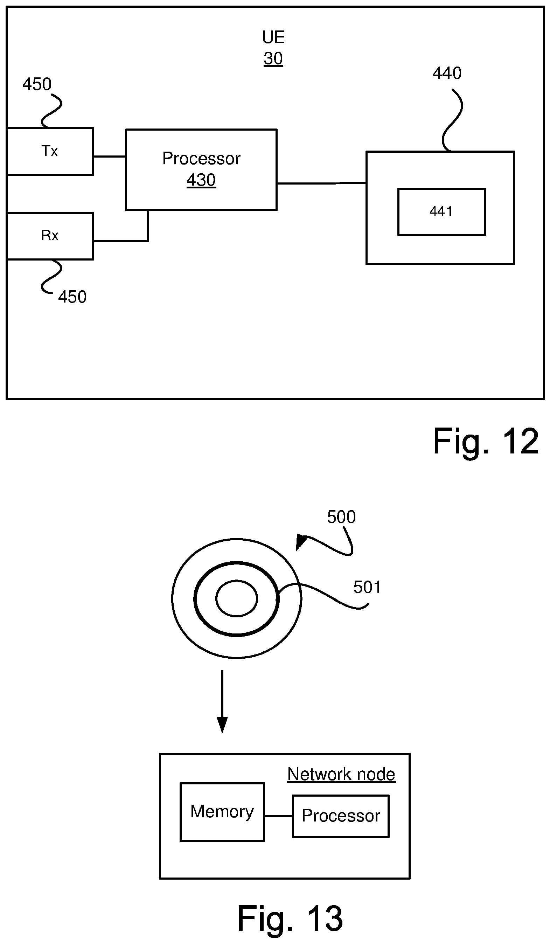

Fig. 12 illustrates still another example implementation of the second network node 30. In the embodiment illustrated in Fig. 12, the second network node 30 comprises a processor 430, a memory 440 comprising various modules as well as a communications interface 450 including a transmitter (Tx) and a receiver (Rx). For example, the receiver 450 may be adapted to receive a control message from the first network node, wherein the control message comprises an instruction to the second network node to discard, or distort, a subsequent data packet. Also, a data packet handling module 441 may be provided to discard, or distort, a subsequent data packet upon receipt of said subsequent data packet.

Reference is now made to Fig. 13, which shows an example of a computer-readable medium (in this example in the form of a data disc 500). In one embodiment the data disc 500 is a magnetic data storage disc. The data disc 500 is configured to carry instructions 501 that when loaded into a processor of a network node (such as the first and/or second network nodes), executes a method or procedure according to any one of the embodiments disclosed in this disclosure. The data disc 500 is arranged to be connected to or within and read by a reading device (not shown), for loading the instructions into the processor. One such example of a reading device in combination with one (or several) data disc(s) 500 is a hard drive. It should be noted that the computer-readable medium can also be other mediums such as compact discs, digital video discs, flash memories or other memory technologies commonly used. In such an embodiment the data disc 500 is one type of a tangible computer-readable medium. The instructions may alternatively be downloaded to a computer data reading device, such as a network node (e.g., a first and/or second network node) capable of reading computer coded data on a computer-readable medium, by comprising the instructions in a computer-readable signal (not shown) which is transmitted via a wireless (or wired) interface (for example via the Internet) to the computer data reading device for loading the instructions into a processor of the network node. In such an embodiment, the computer-readable signal is one type of a non-tangible computer-readable medium.

Various embodiments described in this disclosure allow for a relatively quick congestion indication, and thus feedback, to the receiving network node (e.g. the second network node 30). It is thus made possible for the second network node to react relatively quickly upon a congestion. For example, the second network node may discard, or distort, a subsequent data packet upon receipt of the subsequent data packet. The discarded, or distorted, data packet may in turn result in that the TCP protocol enters into a congestion avoidance mode. Consequently, embodiments described herein may trigger a relatively quick congestion avoidance mechanism. The various embodiments described herein thus provide for improved AQM-based methods and corresponding network nodes. According to some embodiments, an instruction to discard, or distort a subsequent data packet may bypass data being processed on RLC or MAC level by the delivery of the L2 control message in the form of a RLC PDU or in the form of a MAC CE and by optionally elevating the priority of the L2 control message. By bypassing data being processed on RLC or MAC level, it is no longer necessary (nor important) for the second network node (e.g. the UE 30) to process all data on RLC level or MAC level before the second network node can be made aware of the congestion that has occurred at the first network node (e.g. eNB 20). Accordingly, the receiving network node (e.g., the second network node 20) can be made aware of the congestion situation quicker than in the existing art. To sum up, the various embodiments described herein allow for the provision of improved methods and corresponding network nodes for congestion control in wireless communication networks.

In the detailed description hereinabove, for purposes of explanation and not limitation, specific details are set forth in order to provide a thorough understanding of various embodiments described in this disclosure. In some instances, detailed descriptions of well-known devices, components, circuits, and methods have been omitted so as not to obscure the description of the embodiments disclosed herein with unnecessary detail. All statements herein reciting principles, aspects, and embodiments disclosed herein, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated that block diagrams herein can represent conceptual views of illustrative circuitry or other functional units embodying the principles of the embodiments. Similarly, it will be appreciated that any flow charts and the like represent various processes which may be substantially represented in computer readable medium and so executed by a computer or processor, whether or not such computer or processor is explicitly shown. The functions of the various elements including functional blocks, may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions. In terms of computer implementation, a computer is generally understood to comprise one or more processors or one or more controllers. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

## Claims

1. A method (100) of congestion control performed by a first network node of a wireless communication network utilizing a distributed queue system for in-sequence delivery of data packets between the first network node and a second network node, the method comprising:
detecting (110) a condition indicative of a congestion; and
in response to detecting (110) the condition indicative of a congestion:
forming (120) a control message, and
in response thereto, also dynamically adjusting (130) a priority level of the control message in accordance with factors comprising radio conditions or cell load to give the control message an elevated priority level; and
in response thereto, transmitting (140) the control message to the second network node, wherein the control message comprises an instruction to the second network node to discard, or distort, a subsequent data packet.

2. The method according to claim 1, wherein the control message is a **L**ayer **2,** L2, control message.

3. The method according to claim 2, wherein the L2 control message is a **R**adio **L**ink **C**ontrol, RLC, **P**rotocol **D**ata **U**nit, PDU.

4. The method according to claim 2, wherein the L2 control message is a **P**acket **D**ata **C**onvergence **P**rotocol, PDCP, PDU.

5. The method according to claim 2, wherein L2 control message is a **M**edium **A**ccess **C**ontrol, MAC, **C**ontrol **E**lement, CE.

6. The method according to any one of the claims 1-5, wherein the data packet is an **I**nternet **P**rotocol, IP, packet.

7. A first network node (20) for congestion control, the first network node (20) being operable in a wireless communication network adapted to utilize a distributed queue system for in-sequence delivery of data packets between the first network node (20) and a second network node, the first network node (20) comprising:
means (310) adapted to detect a condition indicative of a congestion;
means (320) adapted to form a control message in response to detecting the condition indicative of a congestion;
means (330) adapted to dynamically adjust a priority level of the control message in accordance with factors comprising radio conditions or cell load to give the control message an elevated priority level; and
means (340) adapted to transmit the control message to the second network node in response a detection of a condition indicative of a congestion, wherein the control message comprises an instruction to the second network node to discard, or distort, a subsequent data packet.

8. The first network node (20) according to claim 7, wherein the control message is a **L**ayer **2**, L2, control message.

9. The first network node (20) according to claim 8, wherein the L2 control message is a **R**adio **L**ink **C**ontrol, RLC, **P**rotocol **D**ata **U**nit, PDU.

10. The first network node (20) according to claim 8, wherein the L2 control message is a **P**acket **D**ata **C**onvergence **P**rotocol, PDCP, PDU.

11. The first network node (20) according to claim 8, wherein L2 control message is a **M**edium **A**ccess **C**ontrol, MAC, **C**ontrol **E**lement, CE.

12. The first network node (20) according to any one of the claims 7-11, wherein the data packet is an **I**nternet **P**rotocol, IP, packet.

13. The first network node (20) according to any one of the claims 7-12, wherein the first network node (20) is an evolved **N**ode**B**, eNB, the second network node is a **U**ser **E**quipment, UE, and the wireless communication network is an **E**volved **P**acket **S**ystem, EPS.

14. A computer program comprising instructions which, when the program is executed by a computer, cause the computer to carry out all the steps of the method according to any one of the claims 1-6.

15. A computer-readable data carrier having stored thereon the computer program of claim 14.

## Patentansprüche

1. Verfahren (100) einer Überlastungssteuerung, das von einem ersten Netzknoten eines drahtlosen Kommunikationsnetzes unter Verwendung eines verteilten Warteschlangensystems zur sequentiellen Lieferung von Datenpaketen zwischen dem ersten Netzknoten und einem zweiten Netzknoten durchgeführt wird, wobei das Verfahren umfasst:
Erkennen (110) eines Zustands, der auf eine Überlastung hinweist; und
als Reaktion auf das Erkennen (110) des Zustands, der auf eine Überlastung hinweist:
Bilden (120) einer Steuernachricht, und
als Reaktion darauf, auch dynamisches Einstellen (130) einer Prioritätsstufe der Steuernachricht entsprechend Faktoren, die Funkbedingungen oder Zellenlast umfassen, um der Steuernachricht eine erhöhte Prioritätsstufe zu verleihen; und
als Reaktion darauf, Übertragen (140) der Steuernachricht an den zweiten Netzknoten, wobei die Steuernachricht eine Anweisung an den zweiten Netzknoten umfasst, ein nachfolgendes Datenpaket zu verwerfen oder zu verzerren.

2. Verfahren nach Anspruch 1, wobei die Steuernachricht eine **L**ayer **2**-Steuernachricht, L2-Steuernachricht, ist.

3. Verfahren nach Anspruch 2, wobei die L2-Steuernachricht eine Funkverbindungssteuerungsprotokolldateneinheit, RLC-PDU, ist.

4. Verfahren nach Anspruch 2, wobei die L2-Steuernachricht eine Paketdatenkonvergenzprotokoll-PDU, PDCP-PDU, ist.

5. Verfahren nach Anspruch 2, wobei die L2-Steuernachricht ein Mediumzugriffssteuerungssteuerelement, MAC-CE, ist.

6. Verfahren nach einem der Ansprüche 1 bis 5, wobei das Datenpaket ein **I**nternet**p**rotokoll-Paket, IP-Paket, ist.

7. Erster Netzknoten (20) einer Überlastungssteuerung, wobei der erste Netzknoten (20) in einem drahtlosen Kommunikationsnetz betreibbar ist, das dazu angepasst ist, ein verteiltes Warteschlangensystem zur sequentiellen Lieferung von Datenpaketen zwischen dem ersten Netzknoten (20) und einem zweiten Netzknoten zu verwenden, wobei der erste Netzknoten (20) umfasst:
Mittel (310), die angepasst sind, um einen Zustand zu erkennen, der auf eine Überlastung hinweist;
Mittel (320), die angepasst sind, um als Reaktion auf das Erkennen des Zustands, der eine Überlastung anzeigt, eine Steuernachricht zu bilden;
Mittel (330), die angepasst sind zum dynamischen Einstellen einer Prioritätsstufe der Steuernachricht entsprechend Faktoren, die Funkbedingungen oder Zellenlast umfassen, um der Steuernachricht eine erhöhte Prioritätsstufe zu verleihen; und
Mittel (340), die angepasst sind, um die Steuernachricht als Reaktion auf ein Erkennen eines Zustands, der auf eine Überlastung hinweist, an den zweiten Netzknoten zu übertragen, wobei die Steuernachricht eine Anweisung an den zweiten Netzknoten umfasst, ein nachfolgendes Datenpaket zu verwerfen oder zu verzerren.

8. Erster Netzknoten (20) nach Anspruch 7, wobei die Steuernachricht eine **L**ayer **2**-Steuernachricht, L2-Steuernachricht, ist.

9. Erster Netzknoten (20) nach Anspruch 8, wobei die L2-Steuernachricht eine Funkverbindungssteuerungsprotokolldateneinheit, RLC-PDU, ist.

10. Erster Netzknoten (20) nach Anspruch 8, wobei die L2-Steuernachricht eine Paketdatenkonvergenzprotokoll-PDU, PDCP-PDU, ist.

11. Erster Netzknoten (20) nach Anspruch 8, wobei L2-Steuernachricht ein Mediumzugriffssteuerungssteuerelement, MAC-CE, ist.

12. Erster Netzknoten (20) nach einem der Ansprüche 7 bis 11, wobei das Datenpaket ein **I**nternet**p**rotokoll-Paket, IP-Paket, ist.

13. Erster Netzknoten (20) nach einem der Ansprüche 7 bis 12, wobei der erste Netzknoten (20) ein **E**volved **N**ode**B**, eNB, ist, der zweite Netzknoten eine Benutzereinrichtung, UE, ist und das drahtlose Kommunikationsnetz ein **E**volved **P**acket-**S**ystem, EPS, ist.

14. Computerprogramm, umfassend Anweisungen, die, wenn das Programm durch einen Computer ausgeführt wird, den Computer veranlassen, alle Schritte des Verfahrens nach einem der Ansprüche 1 bis 6 auszuführen.

15. Computerlesbarer Datenträger, auf dem das Computerprogramm nach Anspruch 14 gespeichert ist.

## Revendications

1. Procédé (100) de régulation d'encombrement mis en oeuvre par un premier noeud de réseau d'un réseau de communication sans fil utilisant un système de file d'attente répartie pour une remise en séquence de paquets de données entre le premier noeud de réseau et un deuxième noeud de réseau, le procédé comprenant :
la détection (110) d'une condition indiquant un encombrement ; et
en réponse à la détection (110) de la condition indiquant un encombrement :
la formation (120) d'un message de commande, et
en réponse à ceci, l'ajustement dynamique (130) également d'un niveau de priorité du message de commande conformément à des facteurs comprenant des conditions radio ou une charge de cellule pour donner au message de commande un niveau de priorité élevé ; et
en réponse à ceci, la transmission (140) du message de commande au deuxième noeud de réseau, dans lequel le message de commande comprend une instruction au deuxième noeud de réseau pour écarter, ou altérer, un paquet de données ultérieur.

2. Procédé selon la revendication 1, dans lequel le message de commande est un message de commande de couche (**L**ayer) **2**, L2.

3. Procédé selon la revendication 2, dans lequel le message de commande L2 est une unité de données de protocole (**P**rotocol **D**ata **U**nit), PDU, de commande de liaison radio (**R**adio **L**ink **C**ontrol), RLC.

4. Procédé selon la revendication 2, dans lequel le message de commande L2 est une PDU de protocole de convergence de données de paquet (**P**acket **D**ata **C**onvergence **P**rotocol), PDCP.

5. Procédé selon la revendication 2, dans lequel le message de commande L2 est un élément de commande (**C**ontrol **E**lement), CE, de commande d'accès au support (**M**édium **A**ccess **C**ontrol), MAC.

6. Procédé selon l'une quelconque des revendications 1 à 5, dans lequel le paquet de données est un paquet de protocole Internet (**I**nternet **P**rotocol), IP.

7. Premier noeud de réseau (20) pour une régulation d'encombrement, le premier noeud de réseau (20) étant opérationnel dans un réseau de communication sans fil conçu pour utiliser un système de file d'attente répartie pour remise en séquence de paquets de données entre le premier noeud de réseau (20) et un deuxième noeud de réseau, le premier noeud de réseau (20) comprenant :
un moyen (310) conçu pour détecter une condition indiquant un encombrement ;
un moyen (320) conçu pour former un message de commande en réponse à la détection de la condition indiquant un encombrement ;
un moyen (330) conçu pour ajuster dynamiquement un niveau de priorité du message de commande conformément à des facteurs comprenant des conditions radio ou une charge de cellule pour donner au message de commande un niveau de priorité élevé ; et
un moyen (340) conçu pour transmettre le message de commande au deuxième noeud de réseau en réponse à une détection d'une condition indiquant un encombrement, dans lequel le message de commande comprend une instruction au deuxième noeud de réseau pour écarter, ou altérer, un paquet de données ultérieur.

8. Premier noeud de réseau (20) selon la revendication 7, dans lequel le message de commande est un message de couche (**L**ayer) **2b**, L2.

9. Premier noeud de réseau (20) selon la revendication 8, dans lequel le message de commande L2 est une unité de données de protocole (**P**rotocol **D**ata **U**nit), PDU, de commande de liaison radio (**R**adio **L**ink **C**ontrol), RLC.

10. Premier noeud de réseau (20) selon la revendication 8, dans lequel le message de commande L2 est une PDU de protocole de convergence de données de paquet (**P**acket **D**ata **C**onvergence **P**rotocol), PDCP.

11. Premier noeud de réseau (20) selon la revendication 8, dans lequel le message de commande L2 est un élément de commande (**C**ontrol **E**lement), CE, de commande d'accès au support (**M**édium **A**ccess **C**ontrol), MAC.

12. Premier noeud de réseau (20) selon l'une quelconque des revendications 7 à 11, dans lequel le paquet de données est un paquet de protocole Internet (**I**nternet **P**rotocol), IP.

13. Premier noeud de réseau (20) selon l'une quelconque des revendications 7 à 12, dans lequel le premier noeud de réseau (20) est un noeud B évolué (**e**volved **N**ode**B**), eNB, le deuxième noeud de réseau est un équipement utilisateur (**U**ser **E**quipment), UE, et le réseau de communication sans fil est un système de paquet évolué (**E**volved **P**acket **S**ystem), EPS.

14. Programme informatique comprenant des instructions qui, lorsque le programme est exécuté par un ordinateur, amènent l'ordinateur à effectuer toutes les étapes du procédé selon l'une quelconque des revendications 1 à 6.

15. Porteuse de données lisible par ordinateur sur laquelle est stocké le programme informatique selon la revendication 14.
